# EUROPÄISCHE PATENTANMELDUNG

(11) **EP 4 437 822 A1**
(43) Veröffentlichungstag der Anmeldung: **02.10.2024**
(21) Anmeldenummer: 24401010.4
(22) Anmeldetag: 06.03.2024
(51) Int. Cl.: A01B 73/04, A01C 7/20

(54) **RAHMENANORDNUNG FÜR EINE LANDWIRTSCHAFTLICHE SÄMASCHINE**

(30) Priorität: 29.03.2023 DE 102023108004
(71) Anmelder: Amazonen-Werke H. Dreyer SE & Co. KG, 49205 Hasbergen (DE)
(72) Erfinder: Koch, Jens, 49205 Hasbergen (DE); Mertens, Daniel, 49205 Hasbergen (DE)

(57) **Zusammenfassung**

Die Erfindung betrifft eine Rahmenanordnung (10) für eine mehrere Säaggregate (102, 102a-102l) umfassende landwirtschaftliche Sämaschine (200), mit zumindest zwei Rahmensegmenten (12a, 12b), an welchen die mehreren Säaggregate (102, 102a-102l) der Sämaschine (200) verschieblich befestigbar sind.

## Beschreibung

Die Erfindung betrifft eine Rahmenanordnung nach dem Oberbegriff des Patentanspruchs 1, eine Rahmenbaugruppe nach dem Oberbegriff des Patentanspruchs 10, eine landwirtschaftliche Sämaschine nach dem Oberbegriff des Patentanspruchs 11 und ein Verfahren nach dem Oberbegriff des Patentanspruchs 12.

Eine landwirtschaftliche Sämaschine ist zum Aussäen von Saatgut einer Pflanzenkultur üblicherweise auf eine gewünschte pflanzenspezifische Reihenweite vorkonfiguriert, da Saatgut unterschiedlicher Nutzpflanzenkulturen in unterschiedlichen Reihenweiten auf landwirtschaftlichen Nutzflächen ausgebracht werden muss. So wird beispielsweise Mais mit einem Reihenabstand von üblicherweise 75 cm und Raps mit einem Reihenabstand von üblicherweise 45 cm ausgesät. Die Reihenweite einer Sämaschine wird aus der Kombination einer für den vorgesehenen Einsatzzweck geeigneten Anzahl von Säaggregaten zum Ausbringen von Saatgut auf einer landwirtschaftlichen Nutzfläche und einer Rahmenanordnung mit einer geeigneten Breite festgelegt, wobei die Breite der Rahmenanordnung die Arbeitsbreite der Sämaschine vorgibt und die Säaggregate an der Rahmenanordnung befestigt werden.

Aus dem Stand der Technik sind nur unflexible Rahmenanordnungen für Sämaschinen mit einer vorab festgelegten Reihenweite mit daraus resultierender Anzahl an Säaggregaten und einer entsprechend korrespondierenden Arbeitsbreite bekannt. Eine nachträgliche flexible Änderung der Reihenweite und/oder der Arbeitsbreite ist mit den bekannten Rahmenanordnungen für Sämaschinen nicht ohne Weiteres möglich.

In der Praxis bedeutet dies, dass sich ein Landwirt, welcher unterschiedliche Nutzpflanzen kultivieren möchte, mit der Notwendigkeit konfrontiert sieht, sich unter Aufwendung hoher Anschaffungskosten einen Fuhrpark aus mehreren Sämaschinen mit verschiedenen Rahmenanordnungen zusammenzustellen, welche jeweils unterschiedliche Reihenweiten für eine jeweilige Nutzpflanzenkultur und/oder unterschiedliche Arbeitsbreiten aufweisen.

Die der Erfindung zugrundeliegende Aufgabe besteht somit darin, eine flexibel einstellbare Rahmenanordnung für Sämaschinen bereitzustellen, mittels welcher die Reihenweite einer Sämaschine schnell und einfach anpassbar ist.

Die Aufgabe wird gelöst mit einer Rahmenanordnung der eingangs genannten Art, wobei die Rahmensegmente schwenkbar und teleskopierbar sind.

Dadurch, dass die Rahmensegmente der Rahmenanordnung schwenkbar und teleskopierbar sind, wird es ermöglicht, dass eine einzige Sämaschine in unterschiedlichsten Pflanzenkulturen einsetzbar ist, da die Rahmenanordnung der Sämaschine eine flexible Anpassung der Reihenweite der Sämaschine erlaubt. Auf dieses Weise kann die Reihenweite der Sämaschine einfach und schnell auf einen spezifischen Reihenabstand unterschiedlicher Nutzpflanzen eingestellt und somit zum Ausbringen von Saatgut für unterschiedliche Nutzpflanzen eingesetzt werden. Somit entfällt die Notwendigkeit für einen Landwirt, für unterschiedliche Nutzpflanzen je eine spezifische Sämaschine anschaffen zu müssen.

Die Schwenkbarkeit und Teleskopierbarkeit der Rahmensegmente der Rahmenanordnung stellen zudem sicher, dass bei jeder gewünschten Reihenweite die jeweils zu einer vorhandenen Anzahl an Säaggregaten passende größtmögliche Arbeitsbreite der Sämaschine voll ausgenutzt und gleichzeitig die maximal zulässige Straßentransportbreite und Straßentransporthöhe von Sämaschinen beim Transport auf öffentlichen Straßen eingehalten werden kann.

Vorzugsweise sind die Rahmensegmente als Ausleger für eine Sämaschine ausgebildet. Vorzugsweise sind die Rahmensegmente an einem Grundrahmen der Rahmenanordnung angeordnet. Die Rahmensegmente sind vorzugsweise gelenkig an dem Grundrahmen befestigt. Der Grundrahmen umfasst vorzugsweise eine Kopplungsvorrichtung, mittels welcher die Rahmenanordnung an einem Zug- und/oder Trägerfahrzeug für die Sämaschine gekoppelt werden kann. Vorzugsweise sind die Rahmensegmente um jeweils eine Schwenkachse schwenkbar. Die jeweilige Schwenkachse kann in Fahrtrichtung der Sämaschine oder quer zur Fahrtrichtung der Sämaschine verlaufen. Vorzugsweise verlaufen die jeweiligen Schwenkachsen parallel zueinander. Die Säaggregate sind vorzugsweise in einer Verschieberichtung an den Rahmensegmenten verschieblich angeordnet. Die Verschieberichtung verläuft vorzugsweise entlang der Erstreckungsrichtung der Rahmensegmente und/oder quer zur Fahrtrichtung der Sämaschine. Die Rahmensegmente sind vorzugsweise in einer Teleskopierrichtung teleskopierbar. Die Teleskopierrichtung verläuft vorzugsweise entlang der Erstreckungsrichtung der Rahmensegmente und/oder quer zur Fahrtrichtung der Sämaschine. Die Rahmensegmente sind vorzugsweise mittels zumindest einer Schwenkeinrichtung schwenkbar und mittels einer Teleskopiereinrichtung teleskopierbar. Die Schwenkeinrichtung und/oder die Teleskopiereinrichtung umfassen vorzugsweise, insbesondere jeweils, zumindest einen Aktor, insbesondere zumindest einen Hydraulikzylinder. Die Schwenkeinrichtung und/oder die Teleskopiereinrichtung können zudem zumindest einen Elektromotor umfassen. Die Säaggregate sind vorzugsweise als Ausbring- oder Ablageeinrichtungen ausgebildet, welche Saatgut auf einer landwirtschaftlichen Nutzfläche ausbringen oder ablegen. Die Säaggregate sind vorzugsweise quer zur Fahrtrichtung der Sämaschine und/oder in Erstreckungsrichtung der Rahmensegmente nebeneinander und beabstandet voneinander an den Rahmensegmenten der Rahmenanordnung angeordnet. Vorzugsweise führt das Teleskopieren der Rahmensegmente zu einer Längenänderung der Rahmensegmente. Vorzugsweise verändert sich durch das Teleskopieren der Rahmenelemente die Arbeitsbreite der Sämaschine und/oder die Reihenweite der Sämaschine. Die Rahmenanordnung ist vorzugsweise sowohl für gezogene als auch für getragene Sämaschinen geeignet, insbesondere für Einzelkornsämaschinen. Vorzugsweise ist die Rahmenanordnung auch für landwirtschaftliche Hacken geeignet, wobei bei landwirtschaftlichen Hacken Bodenbearbeitungswerkzeuge an den Rahmensegmenten angeordnet sind. Vorzugsweise ist die Rahmenanordnung auch für landwirtschaftliche Feldspritzen geeignet, wobei bei landwirtschaftlichen Feldspritzen Spritzdüsen an den Rahmensegmenten angeordnet sind.

In einer bevorzugten Ausführungsform der erfindungsgemäßen Rahmenanordnung sind die Rahmensegmente jeweils separat und/oder unabhängig voneinander schwenkbar, wobei die Rahmensegmente durch das Schwenken vorzugsweise in eine Arbeitsstellung und in eine Transportstellung verbringbar sind. Vorzugsweise folgen die Rahmensegmente beim Schwenken jeweils einem Schwenkpfad, wobei die Schwenkpfade der Rahmensegmente sich vorzugsweise voneinander unterscheiden. Vorzugsweise schwenken die Rahmensegmente jeweils in eine, insbesondere in sich voneinander unterscheidende, Schwenkrichtung. Die Rahmenordnung ist durch das Schwenken der Rahmensegmente vorzugsweise von einer Arbeitsstellung in eine Transportstellung und von einer Transportstellung in eine Arbeitsstellung der Rahmenanordnung schwenkbar. Vorzugsweise sind die Rahmensegmente in der Arbeitsstellung horizontal, beispielsweise parallel zu einer landwirtschaftlichen Nutzfläche, und/oder quer zur Fahrtrichtung der Sämaschine ausgerichtet. Vorzugsweise sind die Rahmenelemente in der Transportstellung vertikal, beispielsweise senkrecht zu einer landwirtschaftlichen Nutzfläche und/oder senkrecht zur Fahrtrichtung der Sämaschine, und/oder horizontal, beispielsweise in Fahrtrichtung der Sämaschine, ausgerichtet. Vorzugsweise werden die voneinander abgewandten Enden der Rahmensegmente beim Schwenken aufeinander zu bewegt. Vorzugsweise sind die Rahmenelemente in der Transportstellung bei getragenen Maschinen vertikal und bei gezogenen Maschinen horizontal ausgerichtet. Durch das Verbringen der Rahmensegmente in die Transportstellung wird es ermöglicht, dass die Rahmenanordnung die zulässigen Straßentransportmaße, beispielsweise eine Straßentransportbreite von maximal 3 m und eine Straßentransporthöhe von maximal 4 m, nicht überschreitet, sodass Transporte auf öffentlichen Straßen zulässig sind.

In einer anderen bevorzugten Ausführungsform der erfindungsgemäßen Rahmenanordnung umfassen die Rahmensegmente jeweils ein Hauptrahmenelement, wobei die Hauptrahmenelemente vorzugsweise teleskopierbar sind. Vorzugsweise ist durch das Teleskopieren der Hauptrahmenelemente die Arbeitsbreite der Sämaschine einstellbar, insbesondere zwischen 5,4 m und 9,6 m. Vorzugsweise sind durch Teleskopieren der Hauptrahmenelemente alle an dem jeweiligen Rahmensegment angeordneten Säaggregate quer zur Fahrtrichtung der Sämaschine gemeinsam bewegbar. Eine eingestellte Arbeitsbreite wird vorzugsweise fixiert, sodass sich während eines Arbeitsvorgangs auf einer landwirtschaftlichen Nutzfläche keine unbeabsichtigte Änderung der Arbeitsbreite ereignet. Die Arbeitsbreite kann beispielsweise durch Abstecken der Hauptrahmenelemente mittels Bolzen fixiert werden.

In einer weiteren bevorzugten Ausführungsform der erfindungsgemäßen Rahmenanordnung, umfassen die Hauptrahmenelemente zum Teleskopieren jeweils einen ausfahrbaren Teleskoparm, wobei die Hauptrahmenelemente vorzugsweise jeweils eine Rahmenbasis umfassen, in welche der jeweilige Teleskoparm hineinfahrbar und/oder aus welcher der jeweilige Teleskoparm hinausfahrbar ist. Vorzugsweise führt der jeweilige Teleskoparm beim Teleskopieren eine Linearbewegung entlang eines Linearbewegungspfads aus. Vorzugsweise verläuft der Linearbewegungspfad in Erstreckungsrichtung des Hauptrahmenelements. Vorzugsweise ist die Rahmenbasis an dem Grundrahmen der Rahmenanordnung befestigt. Vorzugsweise umfassen die Hauptrahmenelemente zum Teleskopieren zumindest einen Hydraulikzylinder, wobei der Hydraulikzylinder vorzugsweise als innenliegender Hydraulikzylinder ausgebildet ist, welcher innerhalb des jeweiligen Hauptrahmenelements, besonders bevorzugt innerhalb der Rahmenbasis, angeordnet ist. Vorzugsweise ist die Rahmenbasis der Hauptrahmenelemente zumindest abschnittsweise hohl. Vorzugsweise sind die Hauptrahmenelemente als Hohlprofil, insbesondere als hohles Rechteckprofil, ausgebildet. Vorzugsweise ist der Teleskoparm in der hohlen Rahmenbasis versenkbar.

Es ist weiterhin eine erfindungsgemäße Rahmenanordnung bevorzugt, bei welcher die Rahmensegmente jeweils einen Träger umfassen, wobei die Träger vorzugsweise teleskopierbar sind. Vorzugsweise sind die Träger als Profilrohre, insbesondere als zumindest abschnittsweise hohle Profilrohre, ausgebildet. Vorzugsweise sind die Träger als H-Profil oder als Quadrat-Profil ausgebildet. An den Trägern sind vorzugsweise Säaggregate verschieblich befestigbar. Die Säaggregate können vorzugsweise an dem Träger einhängbar sein. Beispielsweise sind an jedem Träger jeweils zwischen 3 und 9, insbesondere 6, Säaggregate angeordnet. Vorzugsweise sind die Säaggregate manuell per Hand und/oder automatisch mittels eines Aktors stufenlos und/oder in definierten Schritten verschieblich. Durch das Verschieben der Säaggregate ist vorzugsweise die Reihenweite der Sämaschine einstellbar. Eine eingestellte Reihenweite wird vorzugsweise fixiert, sodass sich während eines Arbeitsvorgangs auf einer landwirtschaftlichen Nutzfläche keine unbeabsichtigte Änderung der Reihenweite ereignet. Die Reihenweite kann beispielsweise durch Abstecken der Träger mittels Bolzen fixiert werden.

Es ist außerdem eine erfindungsgemäße Rahmenanordnung vorteilhaft, bei welcher an den Hauptrahmenelementen jeweils einer der Träger angeordnet ist, wobei die Träger vorzugsweise mittels eines Verbindungselements an dem Teleskoparm befestigt und/oder mittels eines Führungselements an der Rahmenbasis geführt ist. Vorzugsweise bewegen sich die Träger beim Teleskopieren der Hauptrahmenelemente mit. Insbesondere führen die Träger beim Teleskopieren des Hauptrahmenelements eine gemeinsame Linearbewegung mit den Hauptrahmenelementen aus. Vorzugsweise umfassen das Hauptrahmenelement und/oder der Träger eine Führung, mittels welcher der Träger beim Teleskopieren des Hauptrahmenelements an dem Hauptrahmenelement geführt wird. Vorzugsweise ist der Träger in einem ersten Endbereich an dem Teleskoparm des Hauptrahmenelements befestigt und in einem zweiten Endbereich an der Rahmenbasis des Hauptrahmenelements geführt. Vorzugsweise verlaufen die Träger parallel zu den Hauptrahmenelementen.

In einer Weiterbildung der erfindungsgemäßen Rahmenanordnung umfassen die Träger zum Teleskopieren jeweils zumindest einen teleskopierbaren Trägerarm, wobei die Träger vorzugsweise jeweils eine Trägerbasis umfassen, in welche der jeweilige Trägerarm hineinfahrbar und/oder aus welcher der jeweilige Trägerarm hinausfahrbar ist und/oder welche jeweils mit dem Hauptrahmenelement verbunden sind. Vorzugsweise umfassen die Träger zum Teleskopieren zumindest einen Hydraulikzylinder, wobei der Hydraulikzylinder vorzugsweise als innenliegender Hydraulikzylinder ausgebildet ist, welcher innerhalb des Trägers, besonders bevorzugt innerhalb der Trägerbasis, angeordnet ist. Vorzugsweise ist die Trägerbasis hohl ausgebildet, insbesondere als hohles Rechteckprofil oder als hohles Rohrprofil.

In einer anderen bevorzugten Ausführungsform der erfindungsgemäßen Rahmenanordnung umfassen Träger jeweils zwei teleskopierbare Trägerarme. Vorzugsweise sind die Trägerarme jeweils an den beiden Enden des Trägers angeordnet, sodass der Träger an seinen beiden Enden teleskopierbar ist. Vorzugsweise ist jeweils ein Ende der Träger dem Grundrahmen der Rahmenanordnung zugewandt und das jeweils andere Ende der Träger dem Grundrahmen der Rahmenanordnung abgewandt. Die an den dem Grundrahmen zugewandten Enden angeordneten Trägerarme bewegen sich beim Teleskopieren vorzugsweise aufeinander zu. Die an den dem Grundrahmen abgewandten Enden angeordneten Trägerarme bewegen sich beim Teleskopieren vorzugsweise voneinander weg.

In einer weiteren bevorzugten Ausführungsform der erfindungsgemäßen Rahmenanordnung dadurch gekennzeichnet, dass die mehreren Säaggregate der Sämaschine an den Trägern verschieblich befestigbar sind, wobei vorzugsweise an der Trägerbasis und an den Trägerarmen jeweils zumindest ein Säaggregat angeordnet ist und beim Teleskopieren der Trägerarme die an den Trägerarmen angeordneten Säaggregate von den an der Trägerbasis angeordneten Säaggregaten beabstandet werden. Durch das Beabstanden der an den Trägerarmen angeordneten Säaggregaten von den an der Trägerbasis angeordneten Säaggregaten kann die beabsichtigte Reihenweite der Sämaschine eingestellt werden, insbesondere, um die Sämaschine an eine bestimmte Pflanzenkultur anzupassen, beispielsweise 45 cm Abstand zwischen den Säaggregaten zum Sähen von Raps. Durch die Reihenweite wird der Abstand von auf der landwirtschaftlichen Nutzfläche zu säenden Reihen definiert. Zum Einstellen der gewünschten Reihenweite werden zusätzlich zum Teleskopieren vorzugsweise die an der Trägerbasis angeordneten Säaggregate an der Trägerbasis auf einen beabsichtigten Abstand zueinander verschoben, beispielsweise manuell per Hand von einem Maschinenbediener oder mittels zumindest eines Aktors, insbesondere mittels zumindest eines Hydraulikzylinders. Beim Teleskopieren werden die an der Trägerbasis angeordneten Säaggregate vorzugsweise nicht bewegt.

Die der Erfindung zugrundeliegende Aufgabe wird weiterhin durch eine Rahmenbaugruppe der eingangs genannten Art gelöst, wobei die Rahmenanordnung nach einer der vorstehenden Ausführungsformen ausgebildet ist. Hinsichtlich der Vorteile und Modifikationen der erfindungsgemäßen Rahmenbaugruppe wird auf die Vorteile und Modifikationen der erfindungsgemäßen Rahmenanordnung verwiesen.

Die der Erfindung zugrundeliegende Aufgabe wird weiterhin durch eine landwirtschaftliche Sämaschine der eingangs genannten Art gelöst, wobei die Rahmenanordnung nach einer der vorstehenden Ausführungsformen ausgebildet ist. Hinsichtlich der Vorteile und Modifikationen der erfindungsgemäßen landwirtschaftlichen Sämaschine wird auf die Vorteile und Modifikationen der erfindungsgemäßen Rahmenanordnung verwiesen. Die Sämaschine kann eine getragene oder eine gezogene Sämaschine sein. Die Sämaschine wird bei einem Sävorgang auf einer landwirtschaftlichen Nutzfläche vorzugsweise von einem Zug- oder Trägerfahrzeug gezogen oder getragen. Das zug- oder Trägerfahrzeug ist vorzugsweise als Traktor ausgebildet. Die Sämaschine und das Zug- oder Trägerfahrzeug bilden vorzugsweise gemeinsamen einen Maschinenverbund. Die Sämaschine kann zudem als selbstfahrende Sämaschine ausgebildet sein. Vorzugsweise umfasst die Sämaschine einen Vorratsbehälter zum Bevorraten von auf der landwirtschaftlichen Nutzfläche auszubringendem Saatgut. Zudem umfasst die Sämaschine vorzugsweise Saatgutleitungen, durch welche das Saatgut aus dem Vorratsbehälter zu den Säaggregaten gefördert wird.

Die der Erfindung zugrundeliegende Aufgabe wird weiterhin durch ein Verfahren der eingangs genannten Art gelöst, wobei beim Ausführen des erfindungsgemäßen Verfahrens der zumindest zwei Rahmensegmente geschwenkt und teleskopiert werden. Vorzugsweise werden die Rahmensegmente gleichzeitig geschwenkt und teleskopiert. Durch ein gleichzeitiges Teleskopieren und Schwenken kann beim Einstellen der Rahmenanordnung Zeit eingespart werden. Beispielsweise können die Rahmensegmente beim Schwenken aus einer Transportstellung in eine Arbeitsstellung Teleskopiert werden, sodass eine Arbeitsbreite und/oder eine Reihenweite bereits fertig eingestellt sind, wenn die Rahmenanordnung die Arbeitsstellung erreicht. Das Schwenken und das Teleskopieren können zudem nacheinander ausgeführt werden.

Vorzugsweise wird durch das erfindungsgemäße Verfahren eine Rahmenanordnung nach einer der vorstehenden Ausführungsformen eingestellt. Hinsichtlich weiterer Vorteile und Modifikationen des erfindungsgemäßen Verfahrens wird auf die Vorteile und Modifikationen der erfindungsgemäßen Rahmenanordnung verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Sämaschine mit einer erfindungsgemäßen Rahmenanordnung und einem Trägerfahrzeug in einer perspektivischen Ansicht;
- Fig. 2: eine erfindungsgemäße Rahmenanordnung mit daran angeordneten Säaggregaten in einem teleskopierten Zustand mit großer Reihenweite und großer Arbeitsbreite in einer Draufsicht;
- Fig. 3: die Rahmenanordnung aus Fig. 2 in einer Frontansicht;
- Fig. 4: die erfindungsgemäße Rahmenanordnung mit daran angeordneten Säaggregaten in einem nicht-teleskopierten Zustand mit kleiner Reihenweite und kleiner Arbeitsbreite in einer Draufsicht;
- Fig. 5: die Rahmenanordnung aus Fig. 4 in einer Frontansicht;
- Fig. 6: die erfindungsgemäße Rahmenanordnung mit daran angeordneten Säaggregaten in einer Transportstellung in einer Frontansicht; und
- Fig. 7.: die Rahmenanordnung aus Fig. 6 in einer Seitenansicht.

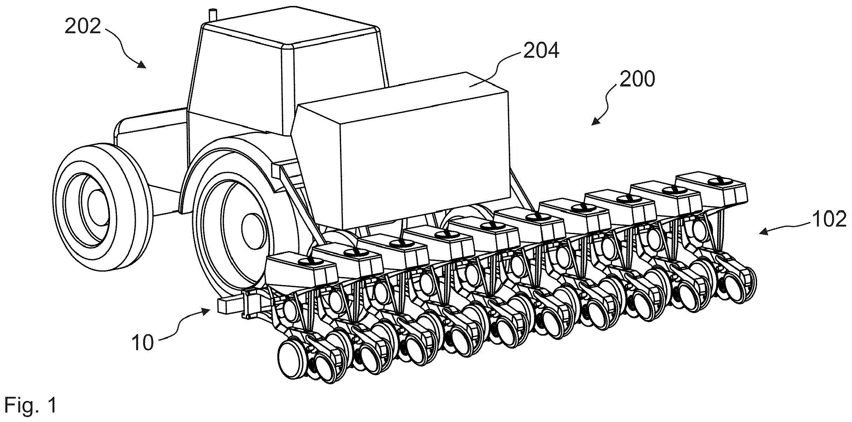

Die Fig. 1 zeigt eine Sämaschine 200, welche von einem Trägerfahrzeug 202 getragen wird. Die Sämaschine 200 ist als getragene Einzelkornsämaschine ausgebildet und umfasst eine Rahmenanordnung 10, an welcher Säaggregate 102 nebeneinander und quer zur Fahrtrichtung beabstandet voneinander angeordnet sind. Die Säaggregate 102 sind als Ablageeinrichtungen ausgebildet, mittels welcher Saatgut vereinzelt in Reihen auf einer landwirtschaftlichen Nutzfläche zum Kultivieren von Nutzpflanzenreihen abgelegt wird. Das Saatgut ist einem Vorratsbehälter 204 der Sämaschine 200 bevorratet und wir über Saatgutleitungen zu den einzelnen Säaggregaten 102 gefördert, in welchen das Saatgut zu einzelnen Saatkörnern vereinzelt und anschließend auf der Nutzfläche abgelegt wird. Die Säaggregate 102 werden von der Rahmanordnung 10 getragen und mit dem Trägerfahrzeug 202 verbunden.

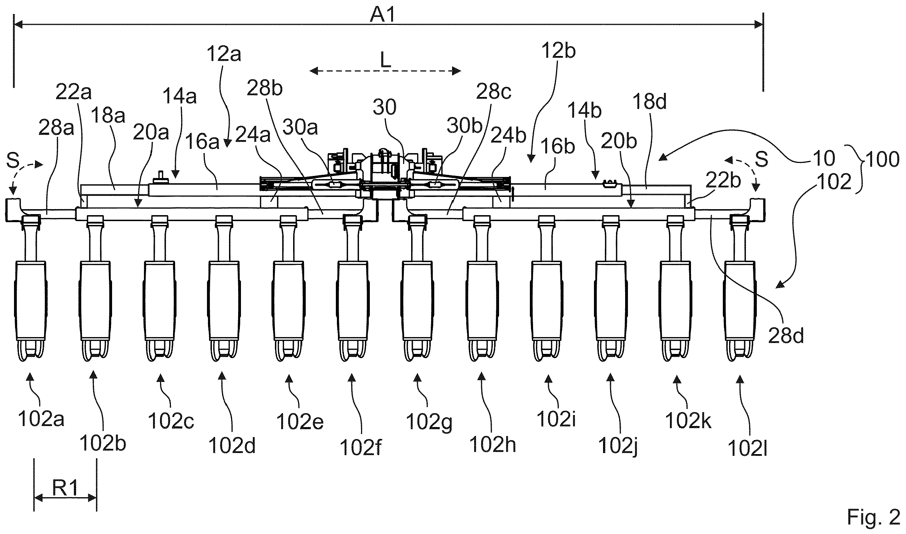

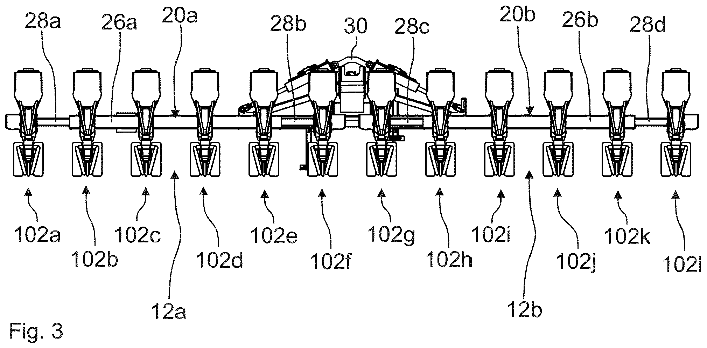

In der Fig. 2 und der Fig. 3 ist eine Rahmenanordnung 10 mit daran angeordneten Säaggregaten 102a-102l zu sehen, wobei die Fig. 2 eine Draufsicht und die Fig. 3 eine Frontalansicht der Rahmenanordnung 10 zeigt.

Die Rahmenanordnung 10 befindet sich in einer Arbeitsstellung, in welcher die Rahmenanordnung 10 mit den Säaggregaten 102a-102l parallel zum Boden einer landwirtschaftlichen Nutzfläche ausgerichtet sind und die Säaggregate 102a-102l Bodeneingriff in die landwirtschaftliche Nutzfläche haben. Die Säaggregate 102a-102l und die Rahmenanordnung 10 bilden gemeinsam eine Rahmenbaugruppe 100.

Die Rahmenanordnung 10 umfasst zwei Rahmensegmente 12a, 12b, welche einander gegenüber und spiegelsymmetrisch an einem Grundrahmen 30 der Rahmenanordnung 10 angeordnet und schwenkbar befestigt an dem Grundrahmen 30 sind. Die Rahmensegmente 12a, 12b sind als Ausleger für eine Sämaschine 200 ausgebildet. Mittels einer Kopplungsvorrichtung der Grundrahmen 30 kann die Rahmenanordnung 10 an einem Trägerfahrzeug 202 befestigt werden.

Das Rahmensegment 12a umfasst ein Hauptrahmenelement 14a und einen an dem Hauptrahmenelement 14a angeordneten Träger 20a. Die Säaggregate 102a-102f sind an dem Träger 20a des Rahmensegments 12a angeordnet. Das Rahmensegment 12b umfasst ein Hauptrahmenelement 14b und einen an dem Hauptrahmenelement 14b angeordneten Träger 20b. Die Säaggregate 102g-102l sind an dem Träger 20b des Rahmensegments 12b angeordnet. Die Hauptrahmenelemente 14a, 14b und die Träger 20a, 20b sind jeweils in der Linearbewegungsrichtung L teleskopierbar. Die Linearbewegungsrichtung L liegt in der Arbeitsstellung der Sämaschine 200 quer zur Fahrtrichtung F. In den Fig. 2 und 3 sind die Hauptrahmenelemente 14a, 14b und die Träger 20a, 20b jeweils auf ihre Maximallänge ausgefahren, sodass die Rahmenanordnung 10 ihre maximal mögliche Auslegerbreite A1, welche beispielsweise 9 Meter beträgt, aufweist.

Die Hauptrahmenelemente 14a, 14b umfassen jeweils eine Rahmenbasis 16a, 16b und einen Teleskoparm 18a, 18b. Die Hauptrahmenelemente 14a, 14b sind als längliche Trägerbalken ausgebildet. Die Rahmenbasis 16a des Hauptrahmenelements 14a ist an einer ersten Seite des Grundrahmen 30 der Rahmenanordnung 10 angeordnet und dort gelenkig an dem Grundrahmen 30 befestigt. Die Rahmenbasis 16b des Hauptrahmenelements 14b ist an einer zweiten Seite des Grundrahmen 30 der Rahmenanordnung 10, welche der ersten Seite des Grundrahmens 30 gegenüberliegend angeordnet ist, angeordnet und dort gelenkig an dem Grundrahmen 30 befestigt.

Die Rahmenbasen 16a, 16b sind jeweils als Hohlprofil ausgebildet. Der Teleskoparm 18a ist an dem Grundrahmen 30 abgewandten Ende der Rahmenbasis 16a entlang der Linearbewegungsrichtung L in die Rahmenbasis 16a linear hineinfahrbar und aus der Rahmenbasis 16a linear hinausfahrbar, sodass das Hauptrahmenelement 14a mittels des ausfahrbaren Teleskoparms 18a zum Herbeiführen einer Längenänderung des Hauptrahmenelements 14a teleskopierbar ist. Der Teleskoparm 18b ist an dem Grundrahmen 30 abgewandten Ende der Rahmenbasis 16b entlang der Linearbewegungsrichtung L in die Rahmenbasis 16b linear hineinfahrbar und aus der Rahmenbasis 16b linear hinausfahrbar, sodass das Hauptrahmenelement 14b mittels des ausfahrbaren Teleskoparms 18b zum Herbeiführen einer Längenänderung des Hauptrahmenelements 14b teleskopierbar ist.

Zum Teleskopieren der Hauptrahmenelemente 14a, 14b ist innerhalb der hohl ausgebildeten Rahmenbasen 16a, 16b jeweils ein innenliegender Hydraulikzylinder angeordnet, mittels welchen die Teleskoparme 18a, 18b in der Linearbewegungsrichtung L bewegbar sind. Durch das Teleskopieren der Hauptrahmenelemente 14a, 14b mittels der ausfahrbaren Teleskoparme 18a, 18b kann die Arbeitsbreite A1, A2 der Rahmenanordnung 10 an einer Sämaschine 200 eingestellt werden.

An dem Hauptrahmenelement 14a des Rahmensegments 12a ist ein Träger 20a angeordnet, wobei der Träger 20a eine Trägerbasis 26a sowie zwei Trägerarme 28a, 28b umfasst. An dem Hauptrahmenelement 14b des Rahmensegments 12b ist ein Träger 20b angeordnet, wobei der Träger 20b eine Trägerbasis 26b sowie zwei Trägerarme 28c, 28d umfasst. Die Trägerarme 28a, 28b sind sich gegenüberliegend an jeweils einem Ende der Trägerbasis 26a angeordnet. Die Trägerarme 28c, 28d sind sich gegenüberliegend an jeweils einem Ende der Trägerbasis 26b angeordnet. Die Trägerbasen 26a, 26b sind als längliche Hohlprofile ausgebildet. Die Trägerarme 28a, 28b sind entlang der Linearbewegungsrichtung L in die Trägerbasis 26a linear hineinfahrbar und aus der Trägerbasis 26a hinausfahrbar. Die Trägerarme 28c, 28d sind entlang der Linearbewegungsrichtung L in die Trägerbasis 26b linear hineinfahrbar und aus der Trägerbasis 26b hinausfahrbar.

Durch das Hineinfahren und Herausfahren der Trägerarme 28a-28d sind die Träger 20a, 20b zum Herbeiführen einer Längenänderung der Träger 20a, 20b teleskopierbar. Innerhalb der Trägerbasen 26a, 26b sind jeweils zwei innenliegende Hydraulikzylinder angeordnet, mittels welchen die Trägerarme 28a-28d zum Teleskopieren in der Linearbewegungsrichtung L bewegt werden können.

Die Säaggregate 102a-102l sind an den Trägern 20a, 20b angeordnet, wobei die Säaggregate 102a-102f an dem Träger 20a des Rahmensegments 12a und die Säaggregate 102g-102l an dem Träger 20b des Rahmensegments 12b angeordnet sind. Das Säaggregat 102a ist an dem Trägerarm 28a und das Säaggregat 102f an dem Trägerarm 28b des Trägers 20a angeordnet. Das Säaggregat 102g ist an dem Trägerarm 28c und das Säaggregat 102l an dem Trägerarm 28d des Trägers 20b angeordnet. Die Säaggregate 102b-102e sind an der Trägerbasis 26a des Trägers 20a und die Säaggregate 102h-102k an der Trägerbasis 26b des Trägers 20b angeordnet.

Durch ein Hineinfahren und Herausfahren der Trägerarme 28a-28d können die an den Trägerarmen 28a, 28b angeordneten Säaggregate 102a, 102f jeweils unabhängig voneinander von den an der Trägerbasis 26a angeordneten Säaggregaten 102b-102e und die an den Trägerarmen 28c, 28d angeordneten Säaggregate 102g, 102l jeweils unabhängig voneinander von den an der Trägerbasis 26b angeordneten Säaggregaten 102h-102k in der Linearbewegungsrichtung L beabstandet werden.

Die Säaggregate 102a-102l sind reversibel lösbar und in der Linearbewegungsrichtung L verschieblich an den Trägern 20a, 20b befestigt, sodass die Säaggregate 102a-102l manuell per Hand von einem Maschinenbediener und/oder mittels Aktoren verschoben und/oder zur Reduzierung der Reihenanzahl abmontiert werden können.

Auf diese Weise kann durch Teleskopieren einer oder mehrerer Trägerarme 28a-28d mit den daran angeordneten Säaggregaten 102a, 102f, 102g, 102l und/oder durch Verschieben an den Trägerbasen 26a, 26b angeordneten Säaggregaten 102b-102e, 102h-102k die Reihenweite R1, R2 der Rahmenanordnung 10 an einer Sämaschine 200 eingestellt werden, wobei die Rahmenanordnung in den Fig. 2 und 3 mit einer großen Reihenweite R1, welche beispielsweise 75 cm betragen kann und insbesondere zum Säen von Maiskulturen notwendig ist, dargestellt ist. Die Reihenweite R1, R2 entspricht dem Abstand der Säaggregate 102a-102l zueinander, wodurch der Abstand der Reihen des auszubringenden Saatguts auf einer landwirtschaftlichen Nutzfläche eingestellt wird. Durch die Teleskopierbarkeit der Rahmenanordnung 10 können die Arbeitsbreite A1, A2 und die Reihenweite R1, R2 flexibel angepasst werden, sodass eine mit der Rahmenanordnung 10 ausgestattete Sämaschine für unterschiedliche Nutzpflanzen mit unterschiedlichen Anforderungen an Reihenabstände eingesetzt werden kann.

Der Träger 20a ist über seine Trägerbasis 26a mittels eines Verbindungselements 22a an dem Teleskoparm 18a befestigt und mittels eines Führungselement 24a an der Rahmenbasis 16a geführt. Der Träger 20b ist über seine Trägerbasis 26b mittels eines Verbindungselements 22b an dem Teleskoparm 18b befestigt und mittels eines Führungselement 24b an der Rahmenbasis 16b geführt.

Dadurch dass die Träger 20a, 20b mittels Verbindungselementen 22a, 22b jeweils an den Teleskoparmen 18a, 18 befestigt und mittels der Führungselemente 24a, 24b jeweils an den Rahmenbasen 16a, 16b geführt sind, bewegen sich die Träger 20a, 20b beim Teleskopieren der Hauptrahmenelemente 14a, 14b durch Bewegen der Teleskoparme 18a, 18b in der Linearbewegungsrichtung L jeweils mit. Es ist eine erste Einstellmöglichkeit zur Einstellung der Arbeitsbreite A1, A2 geschaffen, welche indirekt Einfluss auf die Anordnung der Säaggregate 102a-102l zueinander nimmt nämlich indem die Träger 20a, 20b über die Teleskoparme 18a, 18b in Linearbewegungsrichtung L verschieblich sind. Jeder Teleskoparm 18a, 18b der Hauptrahmenelemente 14a, 14 und alle Trägerarme 28a,-28d der Träger 20a, 20b können unabhängig voneinander und separat teleskopiert werden. Es ist eine zweite Einstellmöglichkeit zur Einstellung der Arbeitsbreite A1, A2 geschaffen, welche direkten Einfluss auf die Anordnung der Säaggregate 102a-102l zueinander nimmt nämlich indem die Trägerarme 28a-28d in Linearbewegungsrichtung L verschieblich sind. In Zusammenschau mit der ersten Einstellmöglichkeit für die Arbeitsbreite A1, A2 über eine Verschiebung der Teleskoparme 18a, 18b ist die Rahmenanorndung 10 somit doppelt teleskopierbar. Daraus ergibt sich eine bisher nicht erreichte Flexibilität für die Einstellung der Arbeitsbreite A1, A2 und Reihenweite R1, R2: Mit der Sämaschine 200 kann dank der Rahmenanordnung 10 bei einer vorgegebenen Anzahl von Säaggregaten 102a-102l sowohl mit großer Reihenweite R1 auf großer Arbeitsbreite A1, als auch mit kleiner Reihenweite R2 auf kleiner Arbeitsbreite A2 gearbeitet werden. Für einen Wechsel zwischen der ersten Arbeitsbreite A1 mit Reihenweite R1 und der zweiten Arbeitsbreite A2 mit Reihenweite R2 ist es lediglich erforderlich den Abstand der Säaggregate 102b-102e, 102h-102k an den Trägerbasen 26a, 26b zu verstellen. Die übrigen Anpassungen lassen sich in besonders einfacher und zweckmäßiger Weise über die doppelte Teleskopierbarkeit der Rahmenanordnung 10 bewerkstelligen.

Die Rahmenanordnung 10 umfasst außerdem als Hydraulikzylinder ausgebildete Aktoren 32a, 32b, mittels welcher die Rahmenanordnung 10 durch Verschwenken der Rahmensegmente 12a, 12b in der Schwenkbewegungsrichtung S in eine Transportstellung gebracht werden kann.

Die Rahmenanordnung 10 ist außerdem an landwirtschaftliche Hacken zur mechanischen Beikrautbekämpfung und/oder landwirtschaftliche Feldspritzen zum Ausbringen von Spritzgut, wie beispielsweise Pflanzenschutzmittel, einsetzbar, wobei an landwirtschaftlichen Hacken Hackwerkzeuge und bei landwirtschaftlichen Feldspritzen Spritzdüsen anstelle der Säaggregate 102a-102) an der Rahmenanordnung 10 angeordnet sind.

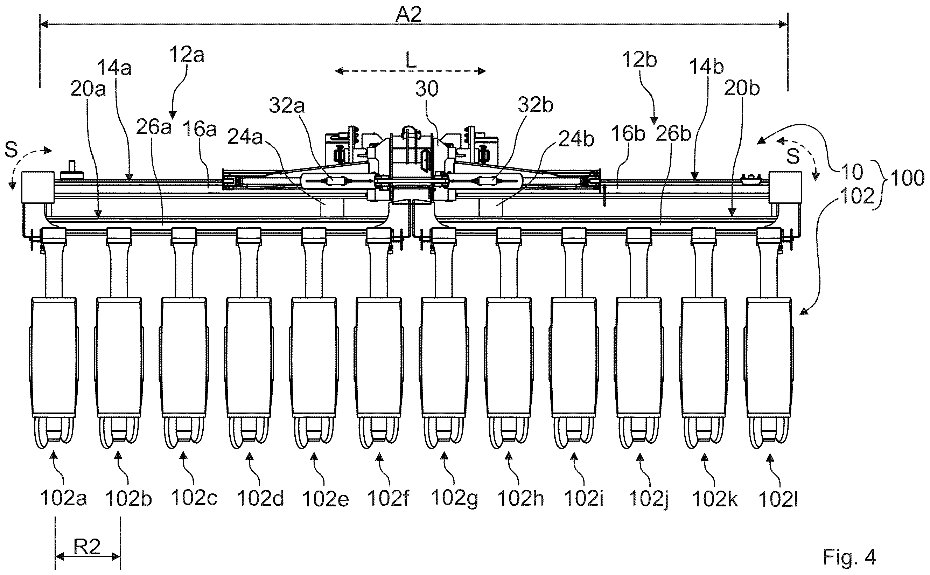

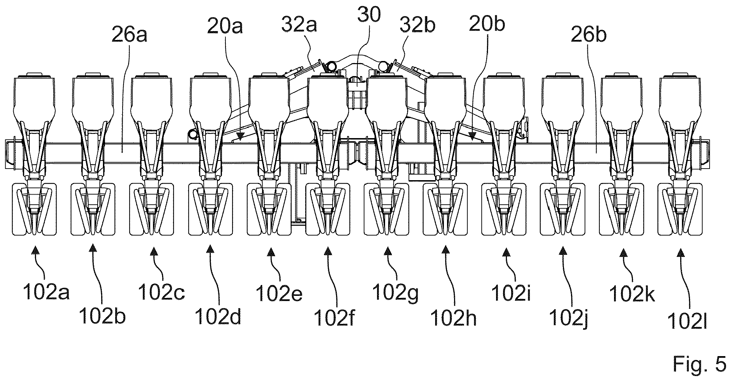

In der Fig. 4 und der Fig. 5 ist die Rahmenanordnung 10 mit daran angeordneten Säaggregaten 102a-102l in einer Arbeitsstellung zu sehen, wobei die Fig. 4 eine Draufsicht und die Fig. 5 eine Frontalansicht der Rahmenanordnung 10 zeigt. Die Hauptrahmenelemente 14a, 14b und die Träger 20a, 20b sind jeweils auf ihre Minimallänge eingestellt, sodass die Rahmenanordnung 10 ihre minimal mögliche Auslegerbreite A2, beispielsweise 5 Meter, und eine kleine Reihenweite R2, beispielsweise 45 cm, aufweist. Zum Einstellen der Auslegerbreite A2 und der Reihenweite R2 werden die Teleskoparme 18a, 18b jeweils vollständig in die jeweils Rahmenbasis 16a, 16b und die Trägerarme 28a-28d jeweils vollständig in die jeweilige Trägerbasis 26a, 26b in der Linearbewegungsrichtung L eingefahren. Auf diese Weise sind die an den Hauptrahmenelementen 14a, 14b gemeinsam mit den daran befestigten und geführten Trägern 20a, 20b sowie die an den Trägerarmen 28a-28d angeordneten Säaggregate 102a, 102f, 102g, 102l zusammengefahren. Zum Einstellen der kleinen Reihenweite R2 werden Abstände zwischen den an den Trägerbasen 26a, 26b angeordneten Säaggregaten 102b-102e, 102h-102k manuell von einem Maschinenbediener oder automatisch durch Verschieben der Säaggregate 102b-102e, 102h-102k in der Längsbewegungsrichtung L verringert. Die kleine Reihenweite R2 von 45 cm kann beispielsweise zum Säen von Raps notwendig sein.

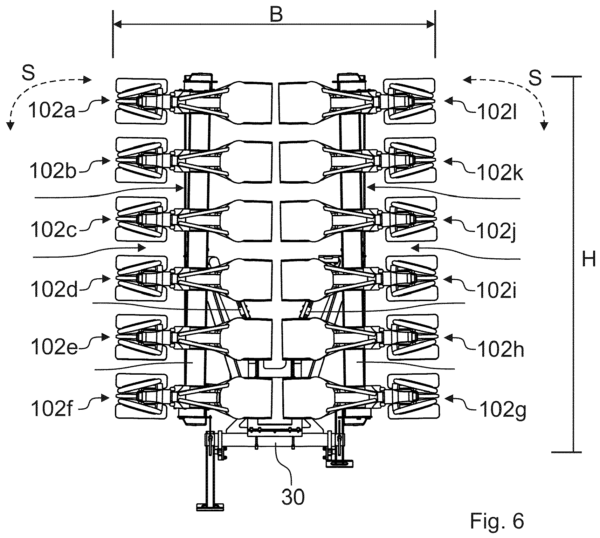

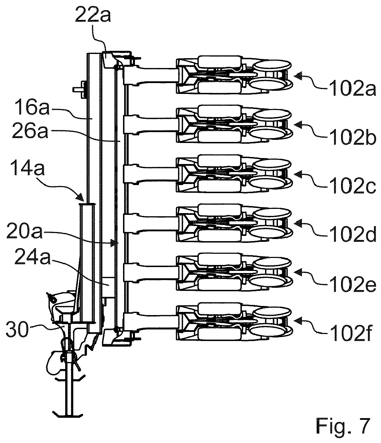

Die Fig. 6 und die Fig. 7 zeigen die Rahmenanordnung 10 10 mit daran angeordneten Säaggregaten 102a-102l in einer Transportstellung, wobei die Rahmenanordnung 10 in der Fig. 6 in einer Frontalansicht und in der Fig. 7 in einer Seitenansicht zu sehen ist.

Die Rahmensegmente 12a, 12b sind jeweils gelenkig an dem Grundrahmen 30 der Rahmenanordnung 10 befestigt. Mittels Aktoren 32a, 32b, welche als Hydraulikzylinder ausgebildet sind, können die Rahmensegmente 12a, 12b in der Schwenkbewegungsrichtung S verschwenkt werden, um die Rahmenanordnung 10 von einer Arbeitsstellung, wie sie in den Fig. 2 bis 5 zu sehen ist, in eine Transportstellung, wie in den Fig. 6 und 7 zu sehen, und von der Transportstellung zurück in die Arbeitsstellung gebracht werden. In der dargestellten Transportstellung sind die Rahmensegmente 12a, 12b senkrecht zum Boden, beispielsweise zu einer landwirtschaftlichen Nutzfläche oder einer Straße, angeordnet. Beim Schwenken in die Transportstellung schwenken die äußeren Enden der Rahmensegmente 12a, 12b, an welchen die Säaggregate 102a, 102l angeordnet sind, aufeinander zu, sodass die an dem Rahmensegmente 12a angeordneten Säaggregate 102a-102f und die an dem Rahmensegmente 12b angeordneten Säaggregate 102g-102I jeweils paarweise gegenüberliegend angeordnet sind und sich die Rahmensegmente 12a, 12b parallel zueinander erstrecken. In der Transportstellung sind zudem alle teleskopierbaren Trägerarme 28a-28d und Teleskoparme 18a, 18b vollständig eingefahren.

Durch das Verschwenken der Rahmensegmente 12a, 12b in die Transportstellung und das vollständige Einfahren der Trägerarme 28a-28d und Teleskoparme 18a, 18b weist die Rahmenanordnung 10 in der Transportstellung eine Transportbreite B und eine Transporthöhe H auf, wobei die Transportbreite B und die Transporthöhe H so klein sind, dass maximal zulässige Straßentransportmaße, welche für den Transport einer landwirtschaftlichen Maschine, wie einer Sämaschine 200 mit einer Rahmenanordnung 10, auf öffentlichen Straßen nicht überschritten werden dürfen, eingehalten werden. Die doppelte Teleskopierbarkeit der Rahmenanordnung 10 erlaubt es hierbei, dass unter Einhaltung der zulässigen Straßentransportmaße in der Arbeitsstellung dennoch eine bisher nicht erreichte große Arbeitsbreite A1 einstellbar ist.

### Bezugszeichen

- 10: Rahmenanordnung
- 12a, 12b: Rahmensegmente
- 14a, 14b: Hauptrahmenelemente
- 16a, 16b: Rahmenbasis
- 18a, 18b: Teleskoparme
- 20a, 20b: Träger
- 22a, 22b: Verbindungselemente
- 24a, 24b: Führungselemente
- 26a, 26b: Trägerbasis
- 28a-28d: Trägerarme
- 30: Grundrahmen
- 32a, 32b: Aktoren

- 100: Rahmenbaugruppe
- 102, 102a-102l: Säaggregate

- 200: Sämaschine
- 202: Trägerfahrzeug
- 204: Vorratsbehälter

- A1, A2: Arbeitsbreite
- B: Transportbreite
- H: Transporthöhe
- L: Linearbewegungsrichtung
- R1, R2: Reihenweite
- S: Schwenkbewegungsrichtung

## Patentansprüche

1. Rahmenanordnung (10) für eine mehrere Säaggregate (102, 102a-102l) umfassende landwirtschaftliche Sämaschine (200), mit
- zumindest zwei Rahmensegmenten (12a, 12b), an welchen die mehreren Säaggregate (102, 102a-102l) der Sämaschine (200) verschieblich befestigbar sind,
**dadurch gekennzeichnet, dass** die Rahmensegmente (12a, 12b) schwenkbar und teleskopierbar sind.

2. Rahmenanordnung (10) nach Anspruch 1,
**dadurch gekennzeichnet, dass** die Rahmensegmente (12a, 12b) jeweils separat und/oder unabhängig voneinander schwenkbar sind, wobei die Rahmensegmente (12a, 12b) durch das Schwenken vorzugsweise in eine Arbeitsstellung und in eine Transportstellung verbringbar sind.

3. Rahmenanordnung (10) nach Anspruch 1 oder 2,
**dadurch gekennzeichnet, dass** die Rahmensegmente (12a, 12b) jeweils ein Hauptrahmenelement (14a, 14b) umfassen, wobei die Hauptrahmenelemente (14a, 14b) vorzugsweise teleskopierbar sind.

4. Rahmenanordnung (10) nach Anspruch 3,
**dadurch gekennzeichnet, dass** die Hauptrahmenelemente (14a, 14b) zum Teleskopieren jeweils einen ausfahrbaren Teleskoparm (18a, 18b) umfassen, wobei die Hauptrahmenelemente (14a, 14b) vorzugsweise jeweils eine Rahmenbasis (16a, 16b) umfassen, in welche der jeweilige Teleskoparm (18a, 18b) hineinfahrbar und/oder aus welcher der jeweilige Teleskoparm (18a, 18b) hinausfahrbar ist.

5. Rahmenanordnung (10) nach einem der vorstehenden Ansprüche,
**dadurch gekennzeichnet, dass** die Rahmensegmente (12a, 12b) jeweils einen Träger (20a, 20b) umfassen, wobei die Träger (20a, 20b) vorzugsweise teleskopierbar sind.

6. Rahmenanordnung (10) nach Anspruch 5,
**dadurch gekennzeichnet, dass** an den Hauptrahmenelementen (14a, 14b) jeweils einer der Träger (20a, 20b) angeordnet ist, wobei die Träger (20a, 20b) vorzugsweise mittels eines Verbindungselements (22a, 22b) an dem Teleskoparm (18a, 18b) befestigt und/oder mittels eines Führungselements (24a, 24b) an der Rahmenbasis (16a, 16b) geführt ist.

7. Rahmenanordnung (10) nach Anspruch 5 oder 6,
**dadurch gekennzeichnet, dass** die Träger (20a, 20b) zum Teleskopieren jeweils zumindest einen teleskopierbaren Trägerarm (28a-28d) umfassen, wobei die Träger (20a, 20b) vorzugsweise jeweils eine Trägerbasis (26a, 26b) umfassen, in welche der jeweilige Trägerarm (28a-28d) hineinfahrbar und/oder aus welcher der jeweilige Trägerarm (28a-28d) hinausfahrbar ist und/oder welche jeweils mit dem Hauptrahmenelement (14a, 14b) verbunden sind.

8. Rahmenanordnung (10) nach einem der Ansprüche 5 bis 7,
**dadurch gekennzeichnet, dass** die Träger (20a, 20b) jeweils zwei teleskopierbare Trägerarme (28a-28d) umfassen.

9. Rahmenanordnung (10) nach einem der Ansprüche 5 bis 8,
**dadurch gekennzeichnet, dass** die mehreren Säaggregate (102, 102a-102l) der Sämaschine (200) an den Trägern (20a, 20b) verschieblich befestigbar sind, wobei vorzugsweise an der Trägerbasis (26a, 26b) und an den Trägerarmen (28a-28d) jeweils zumindest ein Säaggregat (102, 102a-102l) angeordnet ist und beim Teleskopieren der Trägerarme (28a-28d) die an den Trägerarmen (28a-28d) angeordneten Säaggregate (102, 102a-102l) von den an der Trägerbasis (26a, 26b) angeordneten Säaggregaten (102, 102a-102I) beabstandet werden.

10. Rahmenbaugruppe (100) für eine landwirtschaftliche Sämaschine (200), mit
- einer Rahmenanordnung (10), und
- mehreren Säaggregaten (102, 102a-102l), welche an der Rahmenanordnung (10) verschieblich befestigt sind,
**dadurch gekennzeichnet, dass** die Rahmenanordnung (10) nach einem der vorstehenden Ansprüche ausgebildet ist.

11. Landwirtschaftliche Sämaschine (200), mit
- einer Rahmenanordnung (10), und
- mehreren Säaggregaten (102, 102a-102l), welche an der Rahmenanordnung (10) verschieblich befestigt sind,
**dadurch gekennzeichnet, dass** die Rahmenanordnung (10) nach einem der Ansprüche 1 bis 9 ausgebildet ist.

12. Verfahren zum Einstellen einer Rahmenanordnung (10) einer landwirtschaftlichen Sämaschine (200), vorzugsweise einer Rahmenanordnung (10) nach einem der Ansprüche 1 bis 9, wobei die Rahmenanordnung (10) zumindest zwei Rahmensegmente (12a, 12b) umfasst, an welchen mehrere Säaggregate (102, 102a-102l) der Sämaschine (200) verschieblich befestigt sind,
**gekennzeichnet durch** die Schritte:
- Schwenken der zumindest zwei Rahmensegmente (12a, 12b), und
- Teleskopieren der zumindest zwei Rahmensegmente (12a, 12b).
